# EUROPÄISCHE PATENTANMELDUNG

(11) **EP 2 826 926 A1**
(43) Veröffentlichungstag der Anmeldung: **21.01.2015**
(21) Anmeldenummer: 13176644.6
(22) Anmeldetag: 16.07.2013
(51) Int. Cl.: E04B 2/06, E04C 2/288

(54) **Baustein und Verfahren zur Herstellung eines Bausteins**

(71) Anmelder: Luxin (Green Planet) AG, 6004 Luzern (CH)
(72) Erfinder: Die Erfindernennung liegt noch nicht vor
(74) Vertreter: Kiwit, Benedikt

(57) **Zusammenfassung**

Ein Baustein (B) für den Bau von Gebäuden aufweisend zumindest ein Bausteinelement (1) und eine mit diesem Bausteinelement (1) direkt verschäumte aufgeschäumte Schicht (3).

## Beschreibung

Die vorliegende Erfindung betrifft einen Baustein für den Bau von Gebäuden, eine Konstruktion aufweisend wenigstens zwei der Bausteine und ein Verfahren zur Herstellung des Bausteins.

Aus dem Stand der Technik sind sogenannte Schaumplatten oder Schaum-Bauplatten bekannt. Diese Schaumplatten bestehen in der Regel aus einem Schaumkern, welcher einseitig oder beidseitig mit einer Platte (bspw. aufweisend Holz, Aluminium, Fliesen, etc.) verklebt wird. Die Schaumplatten dienen dann als Dämmplatte, Gebäudefassadenelement oder im Sinne eines Trägerelementes zum Anbringen und Tragen von Fliesen und dergleichen, sind jedoch nicht für die Verwendung als Baustein für den Gebäudebau geeignet.

Dementsprechend ist es eine Aufgabe der vorliegenden Erfindung, einen Baustein zur Verwendung für den Bau von Gebäuden oder vergleichbaren Konstruktionen sowie eine Konstruktion aufweisend wenigstens zwei Bausteine und ein Verfahren zur Herstellung des Bausteins bereitzustellen, wobei der Baustein einfach herzustellen und einzusetzen ist und die Merkmale von Bausteinen und Dämmelementen vereint.

Diese Aufgabe wird gelöst durch die Gegenstände der unabhängigen Patentansprüche 1, 2, 14, 15 und 17.

Weitere vorteilhafte Ausgestaltungen der Erfindung sind in den abhängigen Ansprüchen zu finden.

Zur Lösung der oben benannten Aufgabe wird ein Baustein (zur Verwendung) für den Bau von Gebäuden oder vergleichbaren Konstruktionen bereitgestellt, der zumindest ein Bausteinelement und eine mit diesem Bausteinelement direkt verschäumte aufgeschäumte Schicht aufweist. Dabei bedeutet "direkt verschäumt", dass zwischen der aufgeschäumten Schicht und dem Bausteinelement keine weitere Verbindungsschicht, wie bspw. eine Klebeschicht oder dergleichen, vorhanden ist, sondern die aufgeschäumte Schicht an dem Bausteinelement direkt anschließt und sich während des Aufschäumens direkt mit dem Bausteinelement verbindet. Während die Bausteinelemente für eine ausreichende Stabilität sorgen, werden mittels der vorzugsweise ebenfalls stabilen, aufgeschäumten Schicht hervorragende Temperatur- und Schalldämmeigenschaften erzielt. Durch die direkte Verschäumung ergibt sich eine besonders stabile Haftung der aufgeschäumten Schicht mit den Bausteinelementen, so dass ein Baustein mit zusätzlich insgesamt hoher Druckfestigkeit bereitgestellt ist. Weiterhin wird eine zusätzliche Verbindungsschicht zwischen dem Bausteinelement und der aufgeschäumten Schicht eingespart, was nicht nur den Herstellungsprozess vereinfacht und beschleunigt, sondern auch zu einer Verringerung der Herstellungskosten des Bausteins führt. Zudem kann der erfindungsgemäße Baustein in allen beliebigen Formen und Dimensionen gefertigt und somit individuell gestaltet werden. Somit können die Bausteine entsprechend länderspezifischer Bauvorschriften gestaltet werden. Zudem ist es möglich, durch eine Standardisierung der Bausteine sowohl die Bauzeit als auch die Baukosten zu reduzieren. Insbesondere kann der Baustein somit für den Bau von langfristig zu nutzenden Gebäuden/Konstruktionen überall, bspw. in strukturschwachen Regionen, zur Verwendung im Sozialbau und dergleichen, oder für den Bau von temporären Gebäuden/Konstruktionen an jedem beliebigen Ort, bspw. zum Bau von Flüchtlingslagern, für Notunterkünfte nach Umweltkatastrophen, bei Sportveranstaltungen und dergleichen, eingesetzt werden. Ferner wird es mittels des erfindungsgemäßen Bausteins ermöglicht, die Flächen bei einer Skelettbauweise (z.B. von Häusern, Hallen, etc.) effizient, kostengünstig und gut isolierend zu bauen.

Weiterhin wird zur Lösung der oben benannte Aufgabe ein Baustein (zur Verwendung) für den Bau von Gebäuden oder vergleichbaren Konstruktionen bereitgestellt, der zumindest ein Bausteinelement und eine mit diesem Bausteinelement direkt verbundene Dämm-Schicht aufweist. Die Verbindung ist vorzugsweise durch Kleben oder das direkte Verschäumen einer aufgeschäumten Dämm-Schicht mit dem Bausteinelement bereitgestellt. Alternativ sind auch andere Verbindungsmethoden denkbar, wie beispielsweise Verschrauben, Klemmen, Einpressen und sonstige kraft-, form- oder auch stoffschlüssige Verbindungen.

In diesem Zusammenhang bedeutet "direkt verbunden", dass zwischen der Dämm-Schicht und dem Bausteinelement eine feste räumliche Zuordnung besteht bzw. hergestellt ist und die Dämm-Schicht und das Bausteinelement beispielsweise mittels einer Klebeschicht oder einer Schraubenverbindung oder dergleichen miteinander "direkt verbunden", vorzugsweise direkt verschäumt sind. Die Bausteinelemente sorgen, wie bereits oben erwähnt, für eine ausreichende Stabilität, wobei mittels der Dämm-Schicht hervorragende Temperatur- und Schalldämmeigenschaften erzielt werden können. Gemäß zumindest einer Ausführungsform liegt ein erstes Bausteinelement einem zweiten Bausteinelement gegenüber und die aufgeschäumte Schicht bzw. Dämm-Schicht (beide im Rahmen der Erfindung allgemein auch als Schicht bezeichnet) ist als Zwischenschicht zwischen den beiden Bausteinelementen ausgestaltet und mit den (also mit beiden bzw. allen) Bausteinelementen vorzugsweise direkt verschäumt. In diesem Zusammenhang bedeutet "gegenüber" liegen, dass ein Bausteinelement im Wesentlichen senkrecht zu einer Haupterstreckungsebene des Bausteinelements von dem anderen Bausteinelement beabstandet ist oder die Erstreckungsrichtungen des einen Bausteinelements bzw. dessen Teilbereiche im Wesentlichen parallel zu den Erstreckungsrichtungsrichtungen des anderen Bausteinelements bzw. dessen Teilbereiche verlaufen; also entsprechende Teilbereiche der Bausteinelemente jeweils im Wesentlichen parallel zueinander angeordnet sind. Dabei erhält man einen Baustein, der insbesondere für den Bau von Mauern von Gebäuden geeignet ist. Durch die Bereitstellung eines zweiten gegenüberliegenden Bausteinelements wird auch der gesamte Baustein deutlich starrer und widerstandsfähiger gegen Belastungen im Vergleich zur Verwendung lediglich eines einzigen Bausteinelements.

Allgemein wird gemäß der Erfindung unter dem allgemeinen Begriff "Schicht" sowohl eine aufgeschäumte Schicht als auch eine Dämm-Schicht verstanden, wobei letztere nicht notwendigerweise aufgeschäumt sein muss.

Gemäß zumindest einer Ausführungsform sind das bzw. die Bausteinelemente einerseits und die (aufgeschäumte bzw. Dämm-)Schicht andererseits, oder wenigstens deren Stirnseiten auf wenigstens einer Stirnseite des Bausteins, derart zueinander versetzt angeordnet, dass wenigstens eine Stirnseite des Bausteins vorzugsweise als Feder oder Nut, vorzugsweise wenigstens zwei gegenüberliegende Stirnseiten des Bausteins vorzugsweise als Feder und/oder Nut zum formschlüssigen Verbinden von Bausteinen ausgebildet sind. Der Versatz ermöglicht es - beispielsweise bei der Konstruktion von Wänden und dergleichen - die Nut des einen Bausteins in die Feder des anderen Bausteins einzufügen. Die sich daraus ergebene Konstruktion ist deshalb sehr stabil und hat den großen Vorteil, dass optional lediglich eine dünne Klebeschicht vorgesehen werden muss, um die Bausteine miteinander unlösbar zu verbinden. Es ist jedoch auch denkbar, die Bausteine lediglich lösbar ineinander zu stecken. In diesem Fall weist die Feder und/oder die Nut des Bausteins vorzugsweise eine entsprechende Form zum Verrasten der Feder-/Nut-Verbindung des Bausteins auf.

Gemäß zumindest einer Ausführungsform ist zwischen den Bausteinelementen wenigstens ein die Bausteinelemente verbindendes Verbindungselement bereitgestellt, welches sich vorzugsweise im Wesentlichen senkrecht zu einer Haupterstreckungsebene der Bausteinelemente oder wenigstens eines Teilbereichs der Bausteinelemente bzw. im Wesentlichen parallel zu einer Stirnseite der Bausteinelemente oder des Bausteins erstrecken. Es ist auch denkbar, dass sich die Verbindungselemente in jedem beliebigen Winkel zwischen den Bausteinelementen, einem Bausteinelement und einem Verbindungselement oder sogar zwischen zwei Verbindungselementen erstrecken. Zum einen sorgen die Verbindungselemente für eine stabilere Ausgestaltung des Bausteins, zum anderen aber auch für eine Möglichkeit, den von der aufgeschäumten Schicht ausgefüllten Raum nach Belieben auszubilden.

Gemäß zumindest einer Ausführungsform ist wenigstens ein, vorzugsweise wenigstens zwei einander vorzugsweise gegenüberliegende Paare benachbarter Stirnseiten der Bausteinelemente mit einem Verbindungselement als Bausteinelement verbunden, sodass die Bausteinelemente vorzugsweise eine U-Form oder eine seitlich geschlossene Doppel-U-Form bilden. Letztere ist vorzugsweise derart ausgebildet, dass die durch die Form bereitgestellten Hohlräume eine Aufnahme für die Schicht bieten bzw. bilden. Dabei umfasst das Merkmal "gegenüberliegendes Paar benachbarter Stirnseiten" zwei Stirnseiten, wobei die eine Stirnseite des einen Bausteinelements im Wesentlichen in senkrechter Richtung zu der Haupterstreckungsebene des Bausteinelements von der anderen Stirnseite des anderen Bausteinelements beabstandet ist. Hierdurch kann auf die unterschiedlichen Anforderungen an die Positionierung des Bausteins Rechnung getragen werden. Beispielsweise kann die U-Form als Randbaustein beim Bau von Wänden und dergleichen verwendet werden, insbesondere dann, wenn der besagte Baustein an Tür- oder Fensteröffnungen mündet oder falls die Wände des Gebäudes nicht zueinander im rechten Winkel stehen, sondern einen Winkel kleiner als 90° zueinander einnehmen.

Gemäß zumindest einer Ausführungsform sind die einzelnen Bausteinelemente (beispielsweise auch umfassend die Verbindungselemente) integral miteinander ausgebildet. Eine "integrale" Ausgestaltung meint dabei, dass die einzelnen Bausteinelemente aus einem Stück geformt sind. Dies sorgt für eine stabile, geschlossene Verbindung des Bausteins.

Gemäß zumindest einer Ausführungsform ist die (aufgeschäumte bzw. Dämm-)Schicht im Querschnitt (also senkrecht zu einer Haupterstreckungsebene des Bausteins in einer horizontalen Ebene) rechteckig, quadratisch, kreisrund oder in einer beliebigen anderen Form ausgestaltet. Dies soll die Vielfalt der möglichen Formen des aufgeschäumten Materials aufzeigen. So können beispielsweise Bausteine mit beliebig vorgegebener aufgeschäumter Schicht entsprechend den Anforderungen an den Baustein bereitgestellt werden.

Gemäß zumindest einer Ausführungsform ist zumindest eine Nut entlang einer Stirnseite der (aufgeschäumten bzw. Dämm-)(2wischen-)Schicht angeordnet, wobei die Nut vorzugsweise parallel zu den diese einschließenden Bausteinelemente bzw. einer Haupterstreckungsebene des Bausteinelements oder der jeweiligen Teilbereiche des Bausteinelements verläuft; mit anderen Worten längs der entsprechenden Stirnseite. Nach dem Zusammensetzen mit entsprechenden anderen Bausteinen (bspw. mittels einer Feder-/NutVerbindung) ergibt sich somit beispielsweise ein geschlossener und zusammenhängender Kanal, der beispielsweise zum Verlegen von Kabeln und dergleichen einfach von außen zugänglich ist.

Gemäß zumindest einer Ausführungsform sind die Bausteinelemente Sandbausteine. Die Verwendung von Sandbausteinen ermöglicht eine hohe Verwitterungs-, Alkali-, Säure- und Brandbeständigkeit. Auch eine hohe Druckfestigkeit und Wasserundurchlässigkeit wird erreicht, ohne die Bausteine separat nachbehandeln zu müssen. Insbesondere kann Sandstein kein Salz aufnehmen, so dass, anders als bei Beton, die Lebensdauer des Bausteins beispielsweise in der Nähe von salzhaltigen Gewässern deutlich erhöht ist. Zudem muss der Baustein nicht gesondert bearbeitet (bspw. beschichtet) werden, um die vorgenannten Eigenschaften zu erzielen. Entsprechende Bausteinelemente sowie deren Herstellung sind beispielsweise aus der EP 2 062 863 A1 bekannt, auf die an dieser Stelle vollumfänglich verwiesen wird.

Gemäß zumindest einer Ausführungsform sind die Bausteinelemente durch Farbmittel eingefärbt. Dadurch können dem Kunden entsprechend seiner Wünsche beliebig eingefärbte Bausteine angeboten werden, sodass sich eine breite Angebotspalette von Bausteinfarben ergibt.

Gemäß zumindest einer Ausführungsform ist die (aufgeschäumte bzw. Dämm-)Schicht vorzugsweise aus einem porösen Material, besonders vorzugsweise im Wesentlichen aus Polyurethan gebildet. "Im Wesentlichen" heißt dabei vorzugsweise zu 80 Mol%, 80 Vol% oder auch 80 Gew.% oder mehr. Polyurethan sorgt für gute Temperatur- und Schalldämmung und wirkt damit gut als Isolator. Es sind jedoch auch andere Materialien für die Schicht denkbar, sofern sie vorzugsweise dämmende Eigenschaften aufweist und besonders vorzugsweise aufschäumbar mit dem/den Bausteinelement(en) verschäumt werden kann.

Gemäß zumindest einer Ausführungsform können beliebige Elemente in die (aufgeschäumte bzw. Dämm-)Schicht eingebracht, vorzugsweise eingeformt bzw. eingeschäumt werden, insbesondere Armierungen (bspw. Metallgitter, etc.), elektrische und/oder elektronische Bausteine bzw. Bauelemente (bspw. Sensorik, Temperaturfühler, etc.) und/oder Systeme (bspw. Temperiertechnik, etc.) und/oder Leitungen (bspw. Sanitärinstallationen) und/oder beliebige weitere Elemente, wie bspw. Feder-/Nut-Elemente oder Fenster- bzw. Türscharniere und dergleichen. So können beispielsweise auch eingeschäumte Kanal- oder Rohrabschnitte zu Rohrleitungen vorzugsweise durch einfaches Zusammenstecken der einzelnen Bausteine zusammengefügt werden.

Gemäß zumindest einer Ausführungsform sind die Bausteine als Säulenelemente, Fensterlemente oder Türeinfassungselemente ausgestaltet. Weiterhin können die Bausteine auch als Wandelemente, Dachelemente, Bodenelemente, Deckenelemente oder dergleichen ausgestaltet sein, solange sie als Bausteine selbst - und nicht etwa als herkömmliche Dämmplatten wie aus dem Stand der Technik bekannt und eingangs erwähnt - ausgebildet sind. Beispielsweise ist es auch möglich, dass ein einzelner Baustein ein ganzes Bauelement - bspw. eine ganze Wand - bildet und nicht etwa nur ein Wandelement. Dies soll die vielseitige Anwendung der Bausteine deutlich machen, sodass die Bausteine nicht nur als Ziegel für den Aufbau von Gebäuden, sondern auch für die vorbenannten Elemente durch entsprechende Ausgestaltung verwendet werden können.

Gemäß zumindest einer Ausführungsform ist vorzugsweise eines der Bausteinelemente, besonders vorzugsweise dasjenige Bausteinelement, welches auf der Innenseite eines Gebäudes vorzusehen ist, mit einer klimabalancierenden Wirkung ausgestaltet, vorzugsweise derart, dass es aus einem Material hergestellt ist, welches in Abhängigkeit der Umgebungsbedingungen Feuchtigkeit aus der Umgebung aufnimmt und an diese wieder abgibt. Die klimabalancierende Wirkung kann sehr wichtig bei der Verwendung des Bausteins in Gebäuden sein, um eine optimale Klimatisierung des Innenraums zu ermöglichen und um gleichzeitig als Dampfsperre zu dienen, so dass die Feuchtigkeit nicht zu der Gebäudeaußenseite gelangt.

Gemäß zumindest einer Ausführungsform ist der Baustein membranartig ausgebildet und/oder dieser ist in wenigstens eine oder zwei Richtungen senkrecht zu einer Haupterstreckungsebene des Bausteinelements oder Teilbereichen desselben atmungsaktiv und/oder vorzugsweise nur einer oder mehrere der Bausteinelemente ist feuchtigkeitsaktiv. Durch die Bereitstellung dieser Merkmale ergibt sich eine optimale Klimatisierung des Innenraums eines Gebäudes.

In einer bevorzugten Ausführungsform sind die Bausteinelemente als Platte oder L-förmig (also im Querschnitt) ausgebildet. Bei der Ausgestaltung der Bausteinelemente als Platte eignen sich diese vornehmlich für den Bau von Gebäuden, insbesondere von Wänden, wobei die L-förmige Ausgestaltung beispielsweise für Gebäudeecken verwendet werden kann. Neben der Platten- und L-Form sind jedoch auch beliebig andere Formen denkbar, wie beispielsweise eine U-Form oder eine bogenform oder dergleichen.

Zur Lösung der oben benannten Aufgabe wird weiterhin ein Baustein (zur Verwendung) für den Bau von Gebäuden oder vergleichbaren Konstruktionen bereitgestellt, der wenigstens zwei einander gegenüberliegende Bausteinelemente aufweist, wobei zwischen den Bausteinelementen die Bausteinelemente verbindende Verbindungselemente als Bausteinelemente derart vorgesehen sind, dass der Baustein Hohlräume aufweist, welche mit einer Dämm-Schicht gefüllt sind, wobei die Dämm-Schicht vorzugsweise aus einem festen, porösen, rieselfähigen, fließfähigen, flüssigen oder gasförmigen Material besteht. Als gasförmige Materialien kommen insbesondere alle gasförmigen Materialien außer Luft in Betracht, die vorzugsweise dämmende Eigenschaften aufweisen und besonders vorzugsweise beim Bau von Gebäuden bedenkenlos eingesetzt werden können (also bspw. nicht schnell entflammbar oder giftig sind). Die Dämm-Schicht ist vorzugsweise direkt mit den den Hohlraum begrenzenden Bausteinelementen verbunden, besonders vorzugsweise direkt mit den Bausteinelementen verschäumt.

Vorzugsweise schließt/liegt die Dämm-Schicht direkt an den Bausteinelement(en) an. Bezüglich einer Definition der Begriffe "direkt verbunden" und "direkt verschäumt" wird auf obige Ausführungen verwiesen. Das Dämmmaterial, aus welchem die Dämm-Schicht besteht, wird vorzugsweise aktiv in die Hohlräume des Bausteins eingeführt. Während die Bausteinelemente für eine ausreichende Stabilität sorgen, werden mittels der vorzugsweise ebenfalls stabilen Dämm-Schicht, die besonders vorzugsweise aufgeschäumt ist, hervorragende Temperatur- und Schalldämmeigenschaften erzielt. Durch eine direkte Verbindung, insbesondere eine direkte Verschäumung der Dämm-Schicht ergibt sich eine besonders stabile Haftung der Dämm-Schicht mit den Bausteinelementen, so dass ein Baustein mit zusätzlich insgesamt hoher Druckfestigkeit bereitgestellt ist. Weiterhin kann eine zusätzliche Verbindungsschicht zwischen dem Bausteinelement und der (aufgeschäumten) Dämm-Schicht eingespart werden, was nicht nur den Herstellungsprozess vereinfacht und beschleunigt, sondern auch zu einer Verringerung der Herstellungskosten des Bausteins führt. Zudem kann der erfindungsgemäße Baustein in allen beliebigen Formen und Dimensionen gefertigt und somit individuell gestaltet werden. Somit können die Bausteine entsprechend länderspezifischer Bauvorschriften gestaltet werden. Zudem ist es möglich, durch eine Standardisierung der Bausteine sowohl die Bauzeit als auch die Baukosten zu reduzieren. Insbesondere kann der Baustein somit für den Bau von langfristig zu nutzenden Gebäuden/Konstruktionen überall, bspw. in strukturschwachen Regionen, zur Verwendung im Sozialbau und dergleichen, oder für den Bau von temporären Gebäuden/Konstruktionen an jedem beliebigen Ort, bspw. zum Bau von Flüchtlingslagern, für Notunterkünfte nach Umweltkatastrophen, bei Sportveranstaltungen und dergleichen, eingesetzt werden. Ferner wird es mittels des erfindungsgemäßen Bausteins ermöglicht, die Flächen bei einer Skelettbauweise (z.B. von Häusern, Hallen, etc.) effizient, kostengünstig und gut isolierend zu bauen.

Weiterhin betrifft die vorliegende Erfindung eine Konstruktion aufweisend wenigstens zwei Bausteine, die die oben genannten Merkmale aufweisen können. Wie bereits oben erwähnt, kann mit den erfindungsgemäßen Bausteinen folglich eine einfache und stabile Konstruktion, wie bspw. Wand, Boden, Decke, Dach, etc. für ein Gebäude oder insgesamt ein Gebäude und dergleichen, hergestellt bzw. montiert werden.

Gemäß zumindest einer Ausführungsform der Konstruktion sind die Bausteine wenigstens formschlüssig und/oder stoffschlüssig miteinander verbunden. Beispielsweise greift eine Feder des einen Bausteins in eine Nut des anderen Bausteins ein, sodass die Bausteine vorzugsweise formschlüssig miteinander verbunden sind. Dies ermöglicht es, eine sehr stabile Konstruktion zu schaffen, wobei insbesondere durch die Bereitstellung der Feder und Nut höchstens eine dünne Klebeschicht zwischen den Bausteinen aufgetragen werden muss, insbesondere aber ohne Mörtel gearbeitet werden kann. Auch erfolgt durch ein mögliches Ineinanderschieben oder Ineinanderklipsen eine einfache automatische Ausrichtung der einzelnen Bausteine. Dies wiederum erfordert nur eine geringe Qualifikation bzw. Einlernzeit von Personal für den Bau mit derartigen Bausteinen, was wiederum aus Kosten- und Zeitgründen vorteilhaft ist.

Gemäß zumindest einer Ausführungsform der Konstruktion sind die Bausteine lösbar oder unlösbar miteinander verbunden, beispielsweise mittels Kleber oder einer Verschraubung oder dergleichen. Dies sorgt für eine noch bessere Haftung der Bausteine aneinander und verstärkt diese zusätzlich. Bei einer lösbaren Ausgestaltung lassen sich zudem provisorische Gebäude oder mobile Gebäude einfach und schnell errichten und wieder zurückbauen.

Weiterhin stellt die vorliegende Erfindung ein Verfahren zur Herstellung eines Bausteins gemäß einer der vorhergehenden Ausführungsformen des Bausteins bereit, wobei wenigstens ein, vorzugsweise wenigstens zwei sich gegenüberliegende Bausteinelemente bereitgestellt werden. Eine (Zwischen-)Schicht wird dann derart vorgesehen, vorzugsweise aufgeschäumt, dass die (Zwischen-)Schicht direkt mit dem einem oder zwischen und mit den wenigstens zwei Bausteinelementen verbunden, vorzugsweise verschäumt wird.

Gemäß zumindest einer Ausführungsform wird die (Zwischen- )Schicht vorzugsweise derart vorgesehen bzw. aufgeschäumt, dass die Bausteinelemente einerseits und die (Zwischen- )Schicht andererseits oder wenigstens deren Stirnseiten auf wenigstens einer Stirnseite des Bausteins, derart versetzt zueinander angeordnet sind, dass wenigstens eine Stirnseite des Bausteins vorzugsweise als Feder oder Nut, vorzugsweise wenigstens zwei gegenüberliegende Stirnseiten des Bausteins vorzugsweise als Feder und/oder Nut zum formschlüssigen Verbinden von Bausteinen ausgebildet sind.

Im Folgenden werden bevorzugte Ausführungsformen der Erfindung anhand der begleitenden Figuren näher beschrieben.
Fig. 1 zeigt verschiedene Ansichten eines erfindungsgemäßen Bausteins einer ersten Ausführungsform.
Fig. 2 zeigt eine zweite Ausführungsform eines erfindungsgemäßen Bausteins in verschiedenen Ansichten.
Fig. 3 zeigt verschiedene Ansichten einer Konstruktion bestehend aus einer Mehrzahl von erfindungsgemäßen Bausteinen.
Fig. 4 und 5 zeigen verschiedene Ansichten möglicher Variationen des erfindungsgemäßen Bausteins gemäß einer dritten und vierten Ausführungsform.
Fig. 6 zeigt einen L-förmig ausgestalteten erfindungsgemä-ßen Baustein gemäß einer fünften Ausführungsform.
Fig. 7 zeigt ebenfalls einen L-förmig ausgestalteten erfindungsgemäßen Baustein gemäß einer sechsten Ausführungsform, wobei im Vergleich zu Fig. 6 dieser eine im Wesentlichen gespiegelte Variante zeigt.
Fig. 8 bis 10 zeigen weitere Ausgestaltungen des erfindungsgemäßen Bausteins gemäß einer siebten bis neunten Ausführungsform. Insbesondere zeigt Fig. 10 einen Tür- bzw. Fenstersturz.
Fig. 11 zeigt verschiedene Ansichten einer Wandkonstruktion, wobei diese aus den erfindungsgemäßen Bausteinen zusammengesetzt ist.
Fig. 12 zeigt einen erfindungsgemäßen Baustein gemäß einer zehnten Ausführungsform in Form einer Eckverbindung.
Fig. 13 zeigt die Wandkonstruktion gemäß Fig. 11 an der die Eckverbindung gemäß Fig. 12 vorgesehen ist.
Fig. 14 zeigt verschiedene Ansichten eines erfindungsgemäßen Bausteins gemäß einer elften Ausführungsform, wobei ein Tür- oder Fensterrahmenausschnitt im Baustein bereitgestellt ist.
Fig. 15 zeigt den Baustein gemäß Fig. 14, wobei seitlich die Eckverbindung gemäß Fig. 12 vorgesehen ist.

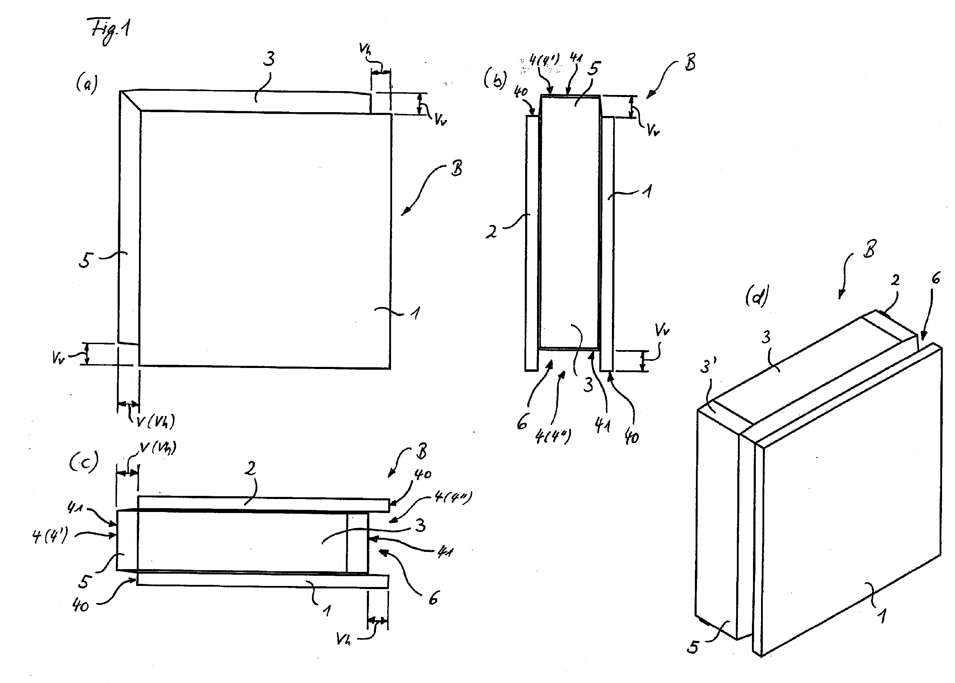

Wie in Figur 1 zu sehen ist, liegt ein erstes Bausteinelement 1, welches vorzugsweise plattenförmig ausgestaltet ist, einem zweiten vorzugsweise plattenförmig ausgestalteten Bausteinelement 2 gegenüber. Alternativ ist es auch denkbar, dass auch nur ein Bausteinelement 1, 2 oder mehrere, wie im Weiteren noch beschrieben wird, bereitgestellt werden. Die Bausteinelemente 1, 2, die in der Figur 1 als Bausteinplattenelemente ausgestaltet sind, sind vorzugsweise als Sandsteine ausgebildet, wie sie beispielsweise aus der EP 2 062 863 A1 bekannt sind. Dies hat den Vorteil, dass kein Salz in den Baustein B aufgenommen werden kann, sodass, anders als bei Beton, die Lebensdauer des Bausteins B deutlich erhöht werden kann. Alternativ ist es auch denkbar, wenigstens einen der Bausteinelemente 1, 2 mittels eines Ziegels aus einem anderen Material, z.B. einem keramischen Material wie bspw. einem (gebrannten) Ton oder Lehm, bereitzustellen.

Zwischen den beiden Bausteinelementen 1, 2 ist eine aufgeschäumte Schicht 3 als Zwischenschicht vorgesehen. Die aufgeschäumte Schicht 3 ist vorzugsweise aus einem porösen Material, besonders vorzugsweise im Wesentlichen aus Polyurethan gebildet, welches besonders gute Wärme-, Schall- und Dämmeigenschaften aufweist. Beispielsweise weist in einem erfindungsgemäßen Baustein B ein Bausteinelement 1, 2, das als Sandbaustein ausgebildet ist, eine spezifische Wärmeleitfähigkeit (λ) von 0.2 W/(K*m) auf, wohingegen die Schicht 3 aus aufgeschäumtem Polyurethan (PolyurethanSchaum) bei beispielsweise einer Dichte von 780 kg/m³ eine spezifische Wärmeleitfähigkeit von 0.027 W/(K*m) aufweist. Die Wärmeleitfähigkeit eines Bausteins B mit aufgeschäumter Polyurethan-Schicht 3 ist damit im Vergleich zu einem reinen Sandbaustein ohne entsprechende Schicht 3 ca. 7.5 mal geringer. Das Schicht 3 insbesondere aus (aufgeschäumtem) Polyurethan isoliert also deutlich besser als das Sandbausteinelement 1, 2. Schon eine relativ dünne Schicht 3 (beispielsweise und vorzugsweise aus aufgeschäumtem Polyurethan) bestimmt deshalb größtenteils den Isolationswert des Gesamtbausteins B. Alternativ ist es neben PUR Kunststoffen auch denkbar, die aufgeschäumte Schicht 3 aus anderen geeigneten Materialen bereitzustellen, wie bspw. thermoplastischen Kunststoffen oder Kunststoffmassen auf Epoxidharz- oder Polyurethanbasis.

Die aufgeschäumte Schicht 3 ist erfindungsgemäß direkt mit dem/den Bausteinelement(en) 1, 2 verschäumt. Die aufgeschäumte Schicht 3 schließt folglich direkt an das/die Bausteinelement(e) 1, 2 an und verbindet sich während des Aufschäumens direkt mit dem/den Bausteinelement(en) 1, 2 und sorgt so für eine stabile Haftung der aufgeschäumten Schicht 3 mit dem/den Bausteinelement(en) 1, 2. Weiterhin wird eine zusätzliche Verbindungsschicht zwischen den Bausteinelementen 1, 2 und der aufgeschäumten Schicht 3 eingespart, was sowohl den Herstellungsprozess vereinfacht und beschleunigt als auch zu einer Verringerung der Herstellungskosten des Bausteins B führt.

Es ist auch denkbar, dass die Schicht 3 als Dämm-Schicht 3 bereitgestellt ist, die nicht aufgeschäumte ist aber dennoch mit dem/den Bausteinelement(en) 1, 2 direkt verbunden ist. Die Verbindung kann dabei mittels Kleben, Schrauben, Verklemmen, Einpressen oder sonstigen kraft-, form- und/oder stoffschlüssigen Verbindungen bereitgestellt werden. Auch ist es denkbar, dass die Schicht 3 ein mit dem/den Bausteinelement(en) 1, 2 direkt verbundene Schicht aus einem festen, porösen, rieselfähigen, fließfähigen, flüssigen und/oder gasförmigen -außer Luft- Material ist. Auch können derartige Materialien in Verbindung mit einer direkt verschäumten aufgeschäumten Schicht 3 auftreten. Polyurethan bildet hierbei ein bevorzugtes Material für die Schicht 3; beispielsweise in poröser Form. Selbstverständlich muss die Struktur des Bausteins B in Abhängigkeit von dem Material der Schicht 3 derart ausgebildet sein, dass die Schicht 3 im Wesentlichen verlier-sicher bereitgestellt ist.

Im Folgenden wird nun überwiegend auf das besonders bevorzugte Ausführungsbeispiel mit der Schicht 3 als "aufgeschäumte Schicht" Bezug genommen, wobei in der Regel alternativ auch andere Schichtstrukturen bzw. Schichtmaterialien der Schicht bzw. Dämm-Schicht 3 denkbar sind, wie sie beispielhaft auch zuvor beschrieben wurden. Insofern gelten die folgenden Ausführungen auch für andere Materialien der Schicht 3 äquivalent. Wenn im Folgenden als von "aufgeschäumter Schicht 3" die Rede ist, so wird hierunter in der Regel ebenso die "Schicht 3" im Allgemeinen bzw. die "Dämm-Schicht 3" im Speziellen verstanden.

Ein plattenförmiger Baustein B, wie beispielsweise in Figur 1 gezeigt, weist vorzugsweise folgende Maße auf: die Kantenlänge der Bausteinelemente 1, 2 sowie der (aufgeschäumten) Schicht 3 beträgt vorzugsweise 600mm, die Stärke/Dicke der Bausteinelemente 1, 2 beträgt vorzugsweise jeweils 30mm und die Stärke/Dicke der (aufgeschäumten) Schicht 3 beträgt vorzugswiese 150mm. Hierbei handelt es sich lediglich um bevorzugte Maße für einen erfindungsgemäßen Baustein B, wobei die Erfindung nicht auf die vorgenannten Maße beschränkt ist.

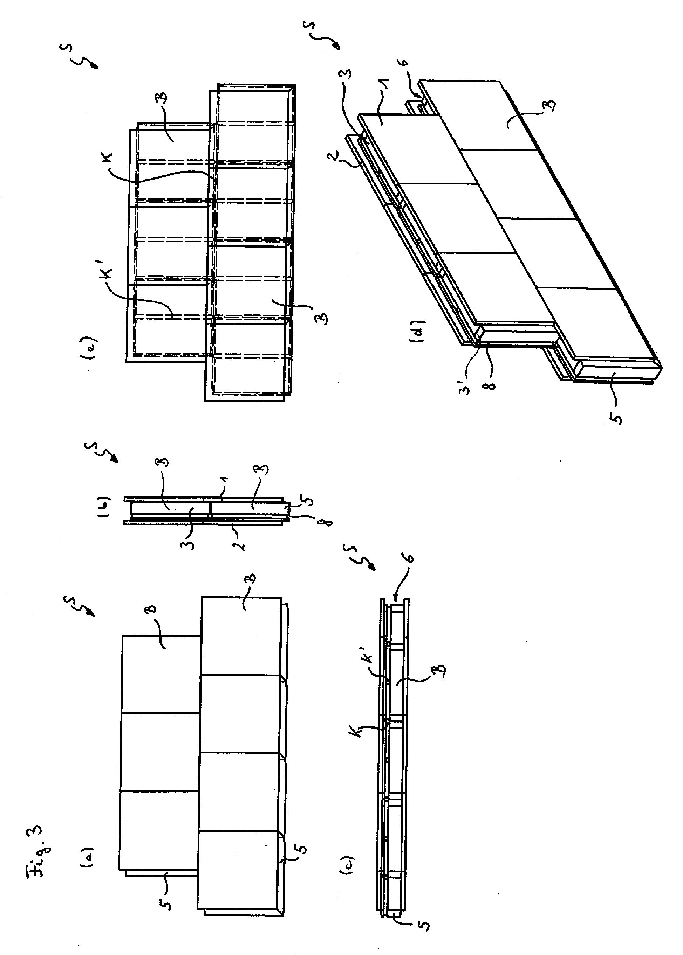

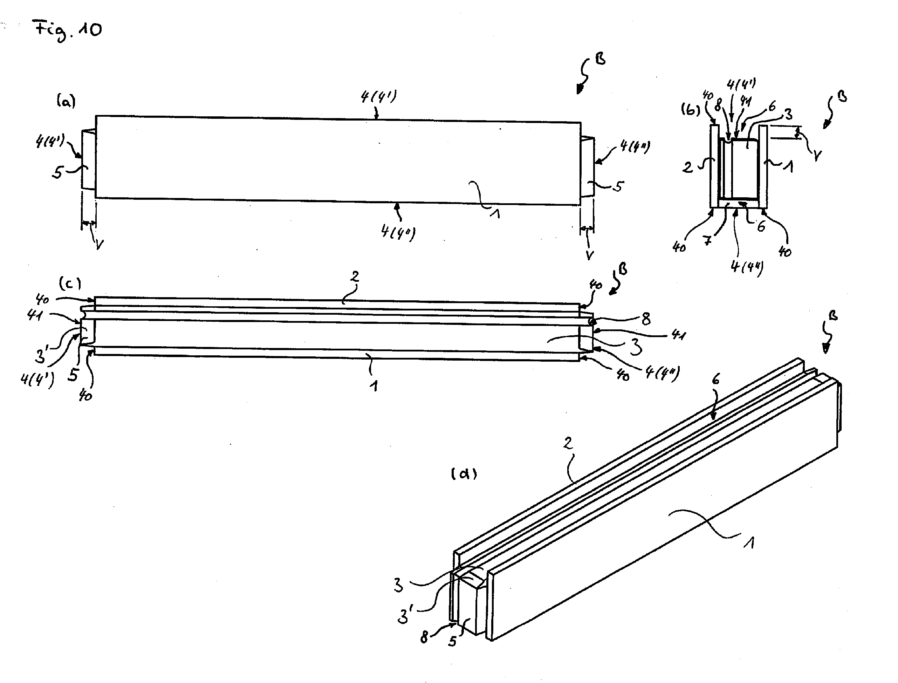

Weiterhin ist vorzugsweise ein Versatz V zwischen den Bausteinelementen 1, 2 einerseits und der (aufgeschäumten) Schicht 3 andererseits vorgesehen; wenigstens zwischen den Stirnseiten derselben (also den Stirnseiten 40, 40 der Bausteinelemente 1, 2 einerseits und der Stirnseite 41 der (aufgeschäumten) Schicht 3 andererseits) auf wenigstens einer Stirnseite 4 des Bausteins B (vorzugsweise auf wenigstens zwei gegenüberliegenden Stirnseiten 4', 4" des Bausteins B). Dieser Versatz V ist derart ausgebildet, dass wenigstens eine Stirnseite 4 des Bausteins B als Feder 5 oder Nut 6 ausgebildet ist (vgl. beispielhaft den Baustein B gemäß Figur 10); vorzugsweise eine Stirnseite 4' des Bausteins B als Feder 5 und die gegenüberliegende Stirnseite 4" entsprechend als Nut 6 ausgebildet ist (vgl. beispielhaft den Baustein gemäß Figur 1), so dass mehrere Bausteine B über eine Feder-/Nut-Verbindung formschlüssig miteinander verbunden werden können (vgl. das beispielhafte Verlegeschema der Figur 3). Die Nut 5 und die Feder 6 sind vorzugsweise derart ausgebildet, dass sie lückenlos ineinandergefügt werden können, so dass der Isolationseffekt des Bausteins B in Verbindung mit anderen Bausteinen B (bspw. zum Bau von Gebäuden) aufrechterhalten bleibt. Figur 1a zeigt dabei den Versatz V zwischen den Bausteinelementen 1, 2 und der (aufgeschäumten) Schicht 3 bzw. zwischen deren Stirnseiten 40, 41 in einer Seitenansicht. Figur 1b zeigt dabei eine Vorderansicht des Bausteins B und Figur 1c eine Draufsicht auf den Baustein B. Figur 1d zeigt eine perspektivische Ansicht des Bausteins B. Der Baustein B gemäß Figur 1 zeigt sowohl einen horizontalen Versatz Vh als auch einen vertikalen Versatz Vv der (aufgeschäumten) Schicht 3 zu dem Bausteinelementen 1, 2, so dass sich jeweils zwei Federn 5 und zwei Nute 6 ergeben. Der horizontale Versatz Vh von an entgegensetzten Stirnseiten 4 des Bausteins B vorgesehenen Nut- 6 und Feder-Elementen 5 ist vorzugsweise identisch, um ein sicheres und bündiges Verbinden der Feder-/Nut-Verbindung zu ermöglichen. Dasselbe gilt auch für den vertikalen Versatz Vv. Zudem sind sowohl der vertikale Versatz Vv als auch der horizontale Versatz Vh vorzugsweise identisch, um ein variables Zusammenstecken bzw. Montieren von mehreren Bausteinen B zu ermöglichen. Der Versatz V kann vorzugsweise zwischen 10 und 100 mm, besonders vorzugsweise ca. 50 mm betragen, jedoch ist die Erfindung nicht auf diese Maße beschränkt. Diese versetzte Ausgestaltung ermöglicht ein baukastenmäßiges Zusammensetzen der Bausteine zu einer (Wand-)Konstruktion S (vgl. Figuren 3, 11, 13 und 15).

Fig. 3 zeigt beispielhaft eine solche Konstruktion S bestehend aus mehreren entsprechend zusammengefügten Bausteinen B gemäß der Erfindung in verschiedenen Ansichten. Durch ein seitliches Versetzen der Bausteine B zueinander, also ein überlappendes Fügen der Bausteine B, kann eine besonders stabile Wandkonstruktion S erreicht werden. Mittels der vorbeschriebenen Feder-/Nut-Verbindung wird zudem ein sicherer Formschluss zwischen den Bausteinen B erzielt. Dabei wird die Feder 5 des einen Bausteins B in die Nut 6 des benachbarten Bausteins B eingeschoben, eingesteckt oder geklipst, so dass die Bausteine B formschlüssig miteinander verbunden sind. Dadurch erhält man in einfacher und schneller Weise beispielsweise eine Wand, die zudem besonders stabil ist. Durch Bereitstellung des Versatzes V (also der Feder-/Nut-Verbindung) ist es möglich, bei dem Bau von Wänden oder Gebäuden oder dergleichen Konstruktionen S mit den erfindungsgemäßen Bausteinen B ohne Mörtel zu arbeiten. Mittels einer zusätzlichen optionalen Verbindungsschicht, wie bspw. durch Auftragen einer dünnen Klebeschicht (bspw. zwischen der Feder 5 des einen Bausteins B und der Nut 6 des anderen Bausteins B) während der Montage, kann ferner eine stoffschlüssige Verbindung zum Fixieren der Bausteine B untereinander ermöglicht werden. Eine derartige stoffschlüssige Verbindung hat zudem den Vorteil, dass die Fugen zwischen den Bausteinen B gleichzeitig sicher abgedichtet werden können. Zusätzlich oder alternativ ist es auch denkbar, eine optionale Schraubverbindung zwischen den Bausteinen B vorzusehen, um eine lösbare Verbindung bereitzustellen oder eine unlösbare Verbindung weiter zu verstärken.

Eine Ausrichtung der Bausteine B zueinander geschieht vorzugsweise automatisch, beispielsweise indem die Bausteine B einfach ineinander geschoben bzw. ineinander geklipst werden. Hierzu kann die Feder-/Nut-Verbindung vorzugsweise ferner eine geometrische Form zum Verrasten der Bausteine B aufweisen, so dass ein sicherer Formschluss ermöglicht wird. Das Vorsehen eines entsprechenden Versatzes V bzw. einer Feder-/Nut-Verbindung hat eine geringe Qualifikation bzw. Einlernzeit von Personal für den Bau mit solchen Bausteinen B zur Folge, was wiederum einen Kosten- und Zeitvorteil begründet.

Weiterhin ist an zumindest einer Ecke der (aufgeschäumten) Schicht 3 vorzugsweise eine Fase 3' vorgesehen. Diese Fase 3' kann bei der Montage der Bausteine B die Griffigkeit der (aufgeschäumten) Schicht 3 erhöhen. Die Fase 3' kann sich beispielsweise über 50mm erstrecken und dabei um 5mm abfallen, jedoch ist die Erfindung nicht auf diese Maße der Fase 3' beschränkt.

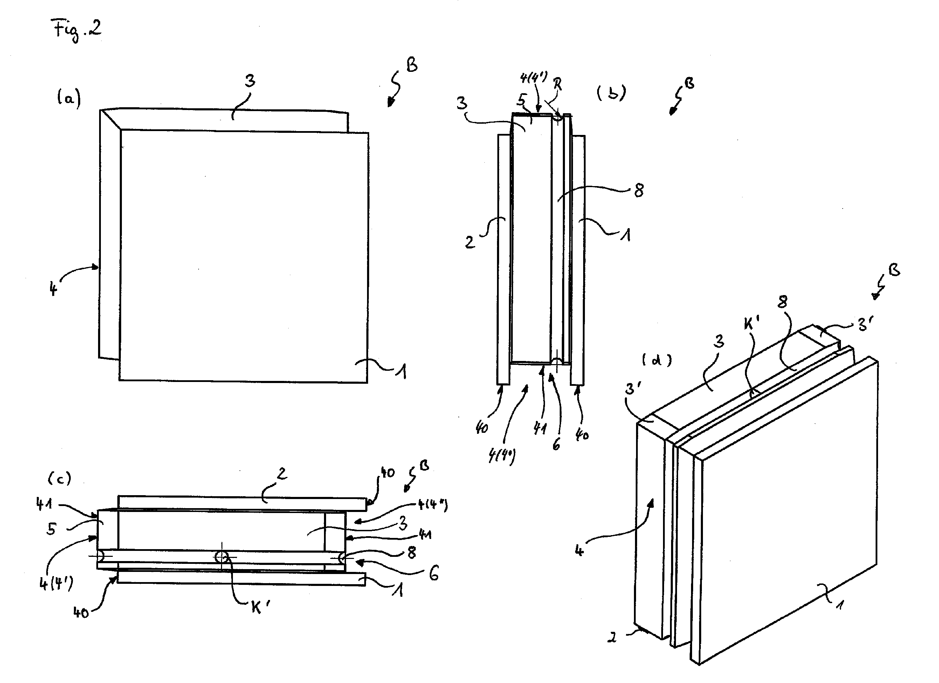

Fig. 2 zeigt eine weitere Ausführungsform des Bausteins B der vorliegenden Erfindung. Insbesondere weist dabei die (aufgeschäumte) (Zwischen-)Schicht 3 eine Nut 8 auf, die entlang wenigstens einer, vorzugsweise entlang wenigstens zweier (gegenüberliegender) oder auch entlang mehrerer Stirnseiten 41 der Zwischenschicht 3 verläuft. Die Nut 8 verläuft dabei vorzugsweise parallel zu den die Zwischenschicht 3 einschließenden Bausteinelementen 1,2 bzw. einer Haupterstreckungsebene (welche beispielsweise in Figur 2a in der Zeichenebene liegt) des Bausteinelements 1, 2 oder den Teilbereichen des Bausteinelements 1, 2 (also längs des Bausteins B bzw. des entsprechenden Baustein-Teilbereichs). Dabei sind wieder verschiedene Ansichten des Bausteins B in der Fig. 2 gezeigt. Die Nut 8 kann dabei nach dem Zusammensetzen mit entsprechenden anderen Bausteinen B einen geschlossenen Kanal K bilden (vgl. Figur 3e), welcher beispielsweise zum einfachen Verlegen von Kabeln während der Montage der Bausteine B oder auch zu einem späteren Zeitpunkt von außen zugänglich ist.

Bei dem Zusammensetzen mehrerer Bausteine B werden die Bausteine B vorzugsweise in einem optimalen Verlegeverfahren insbesondere vorzugsweise seitlich zueinander versetzt aufeinandergesetzt, also überlappend gefügt, um die Stabilität einer entsprechenden Konstruktion S zu erhöhen (vgl. das beispielhafte Verlegeschema der Figur 3). Um in diesem Fall auch vertikale Kanäle durch Zusammenfügen der Bausteine B bereitzustellen und insgesamt ein durchgängiges Leitungs- oder Kanalsystem zu erzielen, kann die (aufgeschäumte) Zwischenschicht 3 ferner einen vertikalen Kanal K' aufweisen, welcher sich von einer vorbestimmten Stoßstelle zweier oben bzw. unten benachbarter Bausteine B in der Konstruktion erstreckt (vgl. Figur 3e). Mit Verweis auf Figur 3e kann die Position der Nute 8 bzw. vertikalen Kanäle K' dem zu verwendenden Verlegeschema einfach angepasst werden.

Die geschlossenen Kanäle K, K' können jeden beliebigen Querschnitt aufweisen und beispielsweise rund oder eckig ausgebildet sein. Auch ist die Größe des Kanals K, K' (also Durchmesser bzw. Kantenlänge) nicht durch die Erfindung beschränkt und insbesondere von dem Einsatzzweck und der Größe der Bausteine B selbst abhängig. So kann ein runder Kanal K, K' beispielsweise einen Durchmesser von 5-40mm aufweisen, um beispielsweise elektrische Leitungen aufzunehmen; der Radius R der Nut 8 beträgt in diesem Fall vorzugsweise 5 bis 20mm. Jedoch ist die Erfindung nicht auf diese Maße beschränkt.

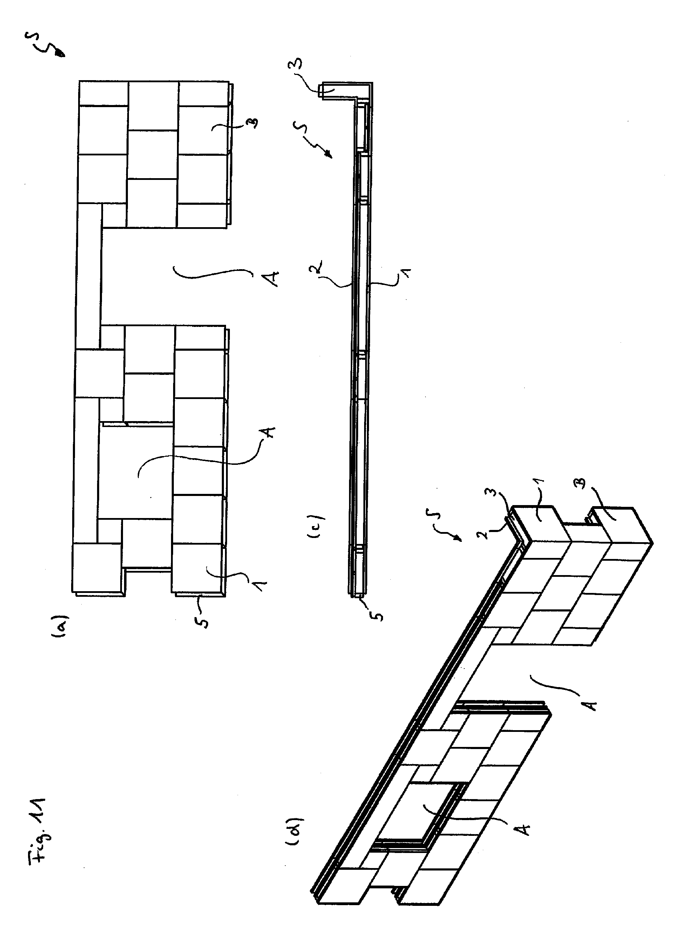

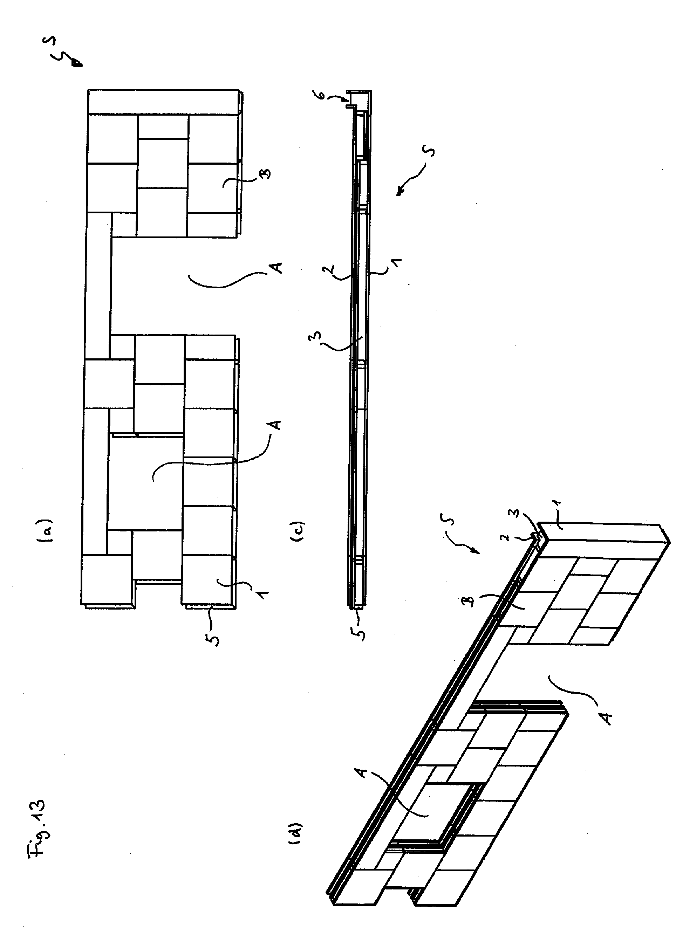

In der (aufgeschäumten) Schicht 3 können ferner beliebige Elemente eingebracht bzw. eingeschäumt sein bzw. werden, insbesondere Armierungen (bspw. Metallgitter) zum Verstärken des Bausteins B und somit der gesamten Konstruktion S, elektrische und/oder elektronische Bauelemente, Bausteine oder Systeme (bspw. Sensorik, Temperiertechnik, etc.) und/oder Leitungen (bspw. Sanitär- oder Elektroinstallationen). Es ist auch denkbar, dass vorgenannte Feder-/Nut-Elemente 5, 6 nicht (nur) durch Versatz der Bausteinelemente 1, 2 zu der (aufgeschäumten) Schicht 3 bereitgestellt werden, sondern (zusätzlich) entsprechende Nut und/oder Federelemente in die (aufgeschäumte) Schicht 3 eingebracht, vorzugsweise eingeschäumt werden. Ferner ist es auch denkbar, dass die Feder-/Nut-Elemente alternativ oder zusätzlich durch eine entsprechende Struktur der (aufgeschäumten) Schicht 3 an den entsprechenden Stirnseiten 41 derselben im Baustein B bereitgestellt werden. Auch können beispielsweise Tür- oder Fensterscharniere in die (aufgeschäumte) Schicht 3 derart eingebracht bzw. eingeschäumt werden, so dass diese durch die Montage der Bausteine B automatisch zum Anbringen von Türen/Fenstern in einem entsprechenden Tür- oder Fensterrahmenausschnitt A (vgl. bspw. Figuren 11 und 13) bereitgestellt werden.

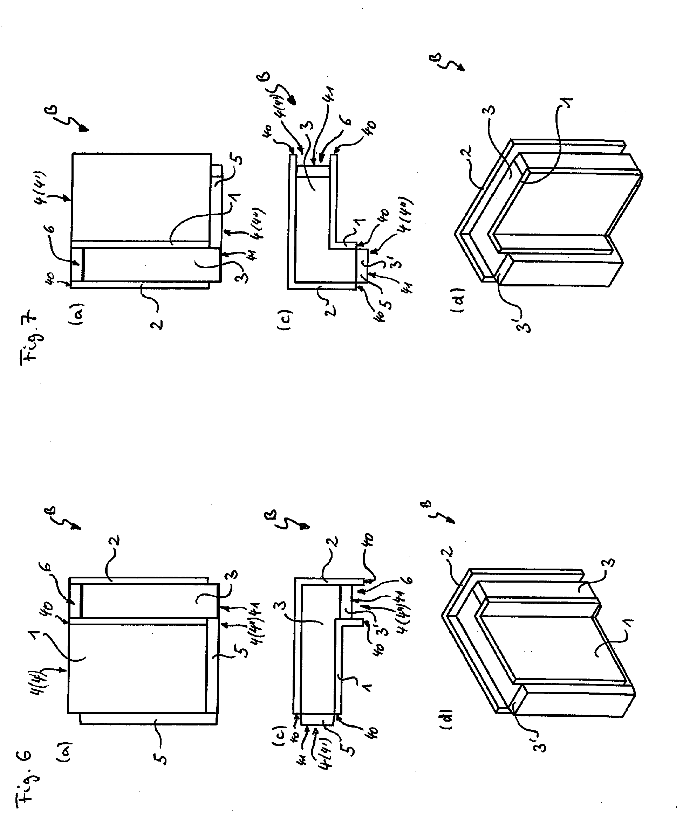

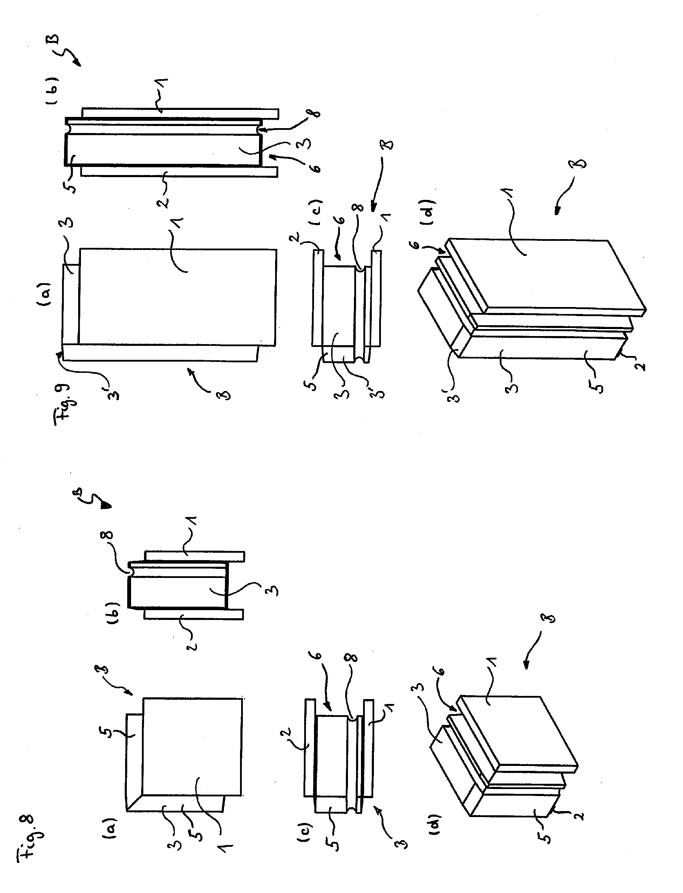

Zudem kann der Baustein B auch eine von der in Figur 1 dargestellten Form abweichende Form aufweisen. Diese sind beispielsweise in den Figuren 6 bis 10 zu sehen. Figuren 6 und 7 zeigen dabei einen L-förmig ausgestalteten erfindungsgemäßen Baustein B, wobei in diesem Fall die Bausteinelemente 1, 2 selbst auch L-förmig ausgebildet sind. Eine Haupterstreckungsebene wird in diesem Fall anhand der jeweiligen Teilbereiche der Bausteine (also der jeweiligen Schenkel des Bausteins bzw. der Bausteinelemente) definiert, so dass ein L-förmiger Baustein folglich zwei Haupterstreckungsebenen bzw. Erstreckungsrichtungen aufweist. Wahlweise können die Schenkellängen gleich sein oder, wie in den Figuren 6 und 7 gezeigt, sich unterscheiden. Dies hängt im Wesentlichen von den optimalen Verlegeschemata bzw. Rastermaßen ab. Es ist deutlich zu erkennen, dass auch in diesen Ausführungsformen die Bausteinelemente 1, 2 einerseits und die Zwischenschicht 3 andererseits - bzw. deren Stirnseiten 40, 41 auf den jeweils sich gegenüberliegenden Stirnseiten 4', 4" des Bausteins B - derart zueinander versetzt angeordnet sind, dass sowohl die zwei gegenüberliegenden seitlichen Stirnseiten 4', 4" des Bausteins B als auch die zwei sich gegenüberliegenden obere und untere Stirnseite 4', 4" des Bausteins B jeweils als Feder 5 und Nut 6 zum formschlüssigen Verbinden von Bausteinen B ausgebildet sind. Dasselbe gilt auch für die Bausteine B gemäß der Figuren 8 und 9, welche unterschiedliche Dimensionen und geometrische Ausgestaltungen von bspw. plattenartigen Bausteinen B zeigen, wobei Form und Dimensionen wiederum von dem optimalen Verlegeschemata bzw. Rastermaßen abhängen.

Figur 10 wiederum zeigt einen Baustein B zur Verwendung als Tür- bzw. Fenstersturz. Es ist in Figur 10 zu erkennen, dass zwischen den Bausteinelementen 1, 2 zumindest ein die Bausteinelemente 1, 2 verbindendes Verbindungselement 7 bereitgestellt ist, welches sich vorzugsweise im Wesentlichen senkrecht zu einer Haupterstreckungsebene der Bausteinelemente 1, 2 erstreckt. Insbesondere ist ein Paar benachbarter Stirnseiten 40, 40 der Bausteinelemente 1, 2 mit dem Verbindungselement 7 als Bausteinelement verbunden, so dass die Bausteinelemente 1, 2 eine U-Form bilden, in der die Zwischenschicht 3 vorgesehen ist. Das Verbindungselement 7 dient in der gezeigten Ausführungsform als Abschluss der zu bildenden Konstruktion S (bspw. Wand) beispielsweise im Bereich eines Fensters oder einer Tür oder dergleichen, wie dies beispielhaft in Figur 11 gezeigt ist. Aus der Figur 11 ist zudem ersichtlich, dass entsprechend dem gewählten Verlegeschema bzw. Rastermaß unterschiedliche Bausteine B verwendet werden müssen. So finden sich in dem gezeigten Wandaufbau bzw. der gezeigten Konstruktion S überwiegend größere quadratische Bausteine B (wie aus Figur 1), kleinere quadratische Bausteine (wie aus Figur 8), rechteckige Bausteine B (wie aus Figur 9), längliche Bausteine B als Fenster- und Türsturz (wie aus Figur 10) sowie L-förmige Eck-Bausteine B (wie aus den Figuren 6 und 7).

An dem Baustein B gemäß der Ausführungsform der Figur 10 ist zu erkennen, dass bzgl. der oberen und unteren Stirnseite 4 des Bausteins B lediglich die dem Verbindungselement 7 abgewandten oberen Stirnseiten 40, 40 der Bausteinelemente 1, 2 einerseits und die obere Stirnseite 41 der (aufgeschäumten) Schicht 3 andererseits über die gesamte Länge des länglichen Bausteins B zueinander versetzt V angeordnet sind und somit die obere Stirnseite 4' des Bausteins B zum formschlüssigen Verbinden von mehreren Bausteinen B als Nut 5 ausgebildet ist. Folglich müssen die obenauf vorzusehenden Bausteine B mit ihrer entsprechend vorzusehenden Feder 6 in diese Nut 5 eingreifen, um eine formschlüssige Verbindung zu erzielen. Um den als Tür- oder Fenstersturz ausgebildeten Baustein B in einer (Wand- )Konstruktion S sicher zu integrieren, erstreckt sich das Verbindungselement 7 in Längsrichtung des Bausteins B gesehen vorzugsweise nicht über dessen gesamte Länge, so dass sich das Verbindungselement 7 vorzugsweise nicht bis zu dem linken und/oder rechten Rand hin erstreckt, sondern von den seitlichen Stirnseiten 4 des Bausteins B beabstandet endet. Auf diese Weise wird an der unteren Stirnseite 4 (4 ") des Bausteins B (vgl. die untere Stirnseite 4" in den Figuren 10a und 10b) jeweils in einem linken und/oder rechten Bereich des Bausteins B (vgl. die linke und rechte Seite des Bausteins B in Figur 10a) eine Nut 6 (vgl. Figur 10b) gebildet. Mit Verweis auf Figur 11 ist es somit möglich, einerseits den Tür-/Fenstersturz fest in eine (Wand-)Konstruktion S zu integrieren, in dem die Nut-Bereiche 6 auf der linken und rechten Unterseite des länglichen Bausteins B auf entsprechende Federn 5 der in Figur 11a dargestellten kleinen Bausteine B gesteckt werden, während eine einem Tür- oder Fensterrahmenausschnitt A zugewandte Stirnseite 4 des Bausteins B mittels des Verbindungselementes 7 gerade abgeschlossen und somit optisch verbessert ausgebildet ist.

In Figur 10 sind ferner sowohl bzgl. der linken als auch bzgl. der rechten Stirnseite 4 des Bausteins B (vgl. Figuren 10a und 10c) die Stirnseiten 40, 40 der Bausteinelemente 1, 2 einerseits und die Stirnseite 41 der (aufgeschäumten) Schicht 3 andererseits derart zueinander versetzt V angeordnet, dass beide seitlichen Stirnseiten 4', 4" des Bausteins B als Feder 6 ausgebildet sind. Folglich müssen die links und rechts vorzusehenden Bausteine B mit ihrer entsprechend vorzusehenden Nut 6 in die jeweiligen Federn 5 eingreifen (vgl. Figur 11), um eine formschlüssige Verbindung zu erzielen. Es ist selbstverständlich auch denkbar, dass beide seitlichen Stirnseiten des Bausteins als Nut 5 oder auch die eine als Nut 5 und die gegenüberliegende als Feder 6 ausgebildet sind. Dies gilt für alle Bausteine B auch für die oberen und unteren Stirnseiten 4 des Bausteins B in gleicher Weise. Ferner kann in gleicher Wiese die obere Stirnseite 4 des in Figur 10 dargestellten Bausteins B sowie wahlweise auch die äußeren Teilbereiche der unteren Stirnseite 4 oder die gesamte untere Stirnseite 4 auch als Feder 6 bereitgestellt werden. In letztgenanntem Fall wäre an der unteren Stirnseite 4 dann kein Verbindungselement 7 vorzusehen.

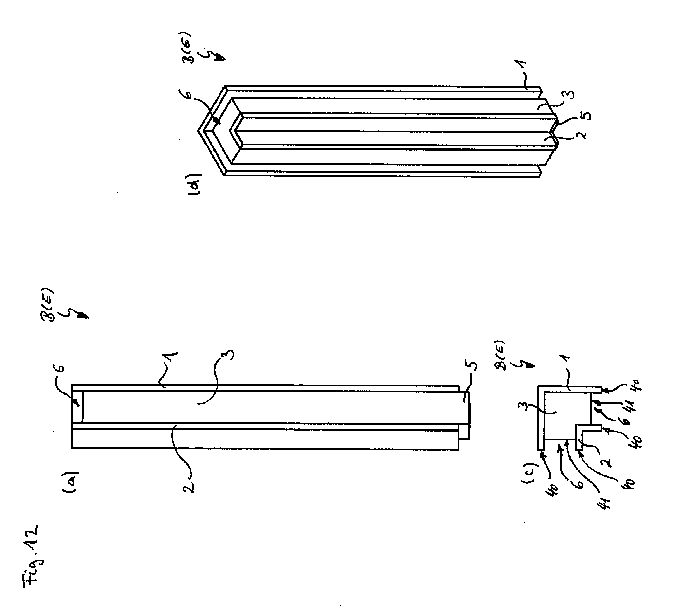

Figur 12 zeigt ferner einen erfindungsgemäßen Baustein B in L-Form als Eckverbindung E, beispielsweise für eine aus den erfindungsgemäßen Bausteinen B bestehenden Wand oder eine sonstige Konstruktion S, wie dies in Figur 13 gezeigt ist. Dieser Eck-Baustein B kann in der Höhe entsprechend ausgelegt werden und hat beispielsweise die Länge einer geplanten Geschosshöhe.

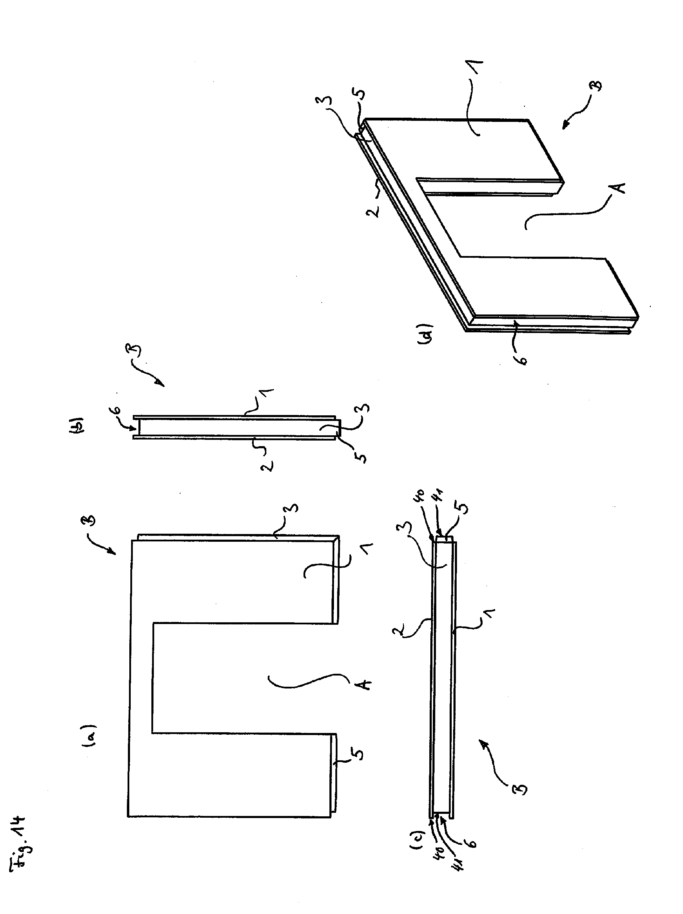

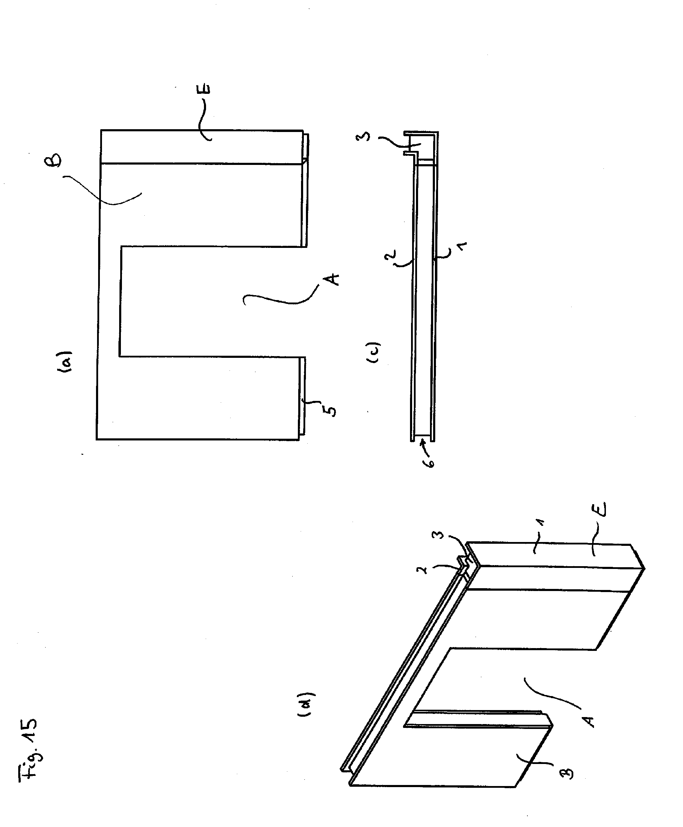

Um die vielfältigen Ausgestaltungsmöglichkeiten der erfindungsgemäßen Bausteine B darzulegen, zeigt Figur 14 einen erfindungsgemäßen Baustein B, wobei ein Tür- oder Fensterrahmenausschnitt A im Baustein B bereitgestellt ist. In Figur 15 ist der Baustein B gemäß Figur 14 dargestellt, wobei seitlich an den Baustein B die L-förmige Eckverbindung E angebracht ist.

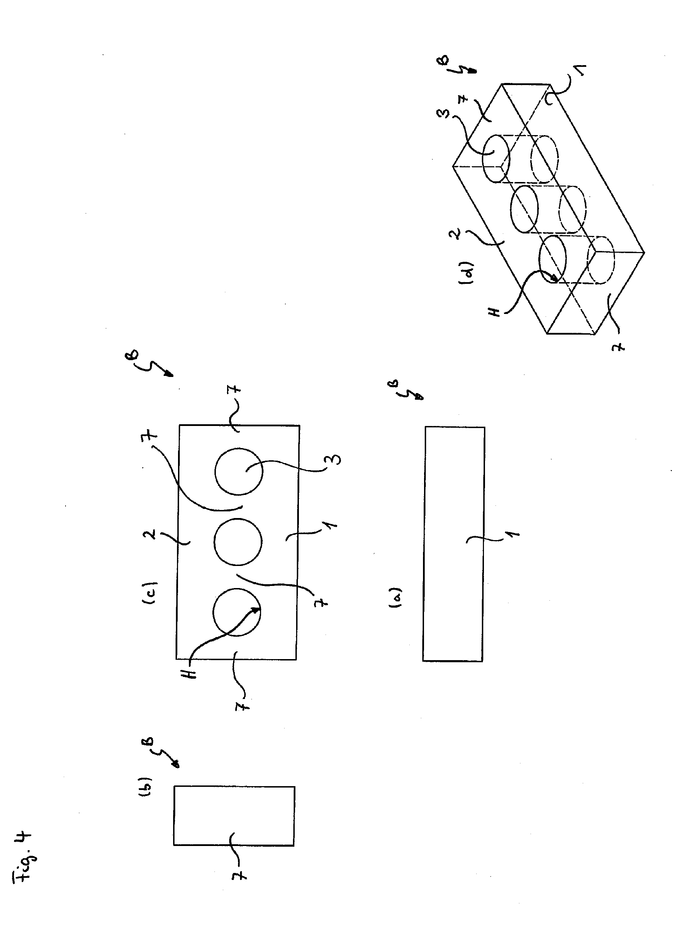

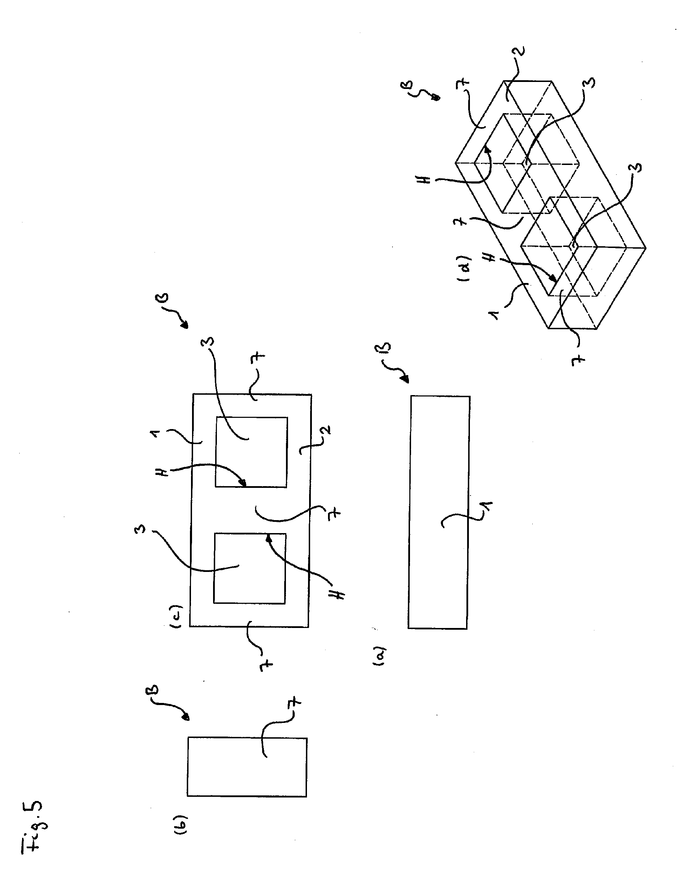

Sowohl die Bausteinelemente 1, 2 als auch der gesamte Baustein B sind nicht auf die vorbeschriebenen plattenförmigen oder L-förmigen Ausgestaltungen beschränkt, sondern können jede denkbare Form aufweisen. Insbesondere können die Bausteinelemente plattenförmig (vgl. Figuren 1 bis 3, 8 bis 10 und 14) sein oder (im Querschnitt) eine L-Form (vgl. Figuren 6 und 7), eine U-Form (vgl. Figur 10b) oder Doppel-U-Form (vgl. beispielsweise Figuren 4a und 5a) aufweisen. Ferner sind die Bausteine B vorzugsweise quadratisch oder rechteckig, können aber auch jede andere Geometrie aufweisen. Der Baustein B kann folglich beispielsweise auch kreisrund oder bogenförmig oder in einer anderen gewünschten Form ausgebildet sein und beispielsweise als Säulenelement, Fensterelement oder Türeinfassungselement Verwendung finden. Zudem ist die Erfindung nicht auf bestimmte Dimensionen der Bausteine B sowie deren Elemente (Bausteinelemente 1, 2 und Schicht 3) beschränkt. So können die Bausteine B entsprechend ländertypischer Baumerkmale, Bauvorgaben sowie den physikalischen Anforderungen der Bausteine B angepasst werden. Auch können die Abmessungen und Ausgestaltungen der Bausteine B an angestrebte Verlegeschemata oder Rastermaße angepasst werden. Wie mit Verweis auf Figur 14 bereits beschrieben, können auch ganze (Wand-)Elemente mit größeren Abmessungen als erfindungsgemäßer Baustein B bereitgestellt werden. Diese Bauart kann in der Skelettbauweise Verwendung finden und die Bauzeit erheblich verkürzen. Zudem können bereits bei der Herstellung der Bausteine B Tür- und Fensterausschnitte A vorgesehen werden. Wie zuvor bereits erwähnt, kann der Baustein B aber auch als anderes Bau- bzw. Gebäudeelement wie beispielsweise ein Dachelement, Bodenelement, Deckenelement oder ähnliches ausgestaltet sein.

Figur 11 zeigt beispielhaft eine ganze Wand eines Hauses, wobei der Raum für ein Fenster und eine Tür ausgespart ist und beispielhaft mittels eines Tür- und Fenstersturzes bestehend aus den erfindungsgemäßen Bausteinen B (vgl. Figur 10) oben abgeschlossen ist.

Figuren 4 und 5 zeigen weitere Ausführungsformen des Bausteins B der vorliegenden Erfindung. Dabei verlaufen zwischen den Bausteinelementen 1, 2 Verbindungselemente 7 als weitere Bausteinelemente sowohl in der Mitte als auch an den Stirnseiten 4 der Bausteinelemente 1, 2, wobei sich die Verbindungselemente 7 vorzugsweise im Wesentlichen senkrecht zu einer Haupterstreckungsebene der Bausteinelemente 1, 2 (oder von Teilbereichen derselben) erstrecken. Allgemein sind also bezüglich dieser Ausführungsform wenigstens zwei einander gegenüberliegende Bausteinelemente 1, 2 vorgesehen, wobei zwischen den Bausteinelementen 1, 2 die Bausteinelemente 1, 2 verbindende Verbindungselemente 7 als Bausteinelemente derart vorgesehen sind, dass der Baustein B Hohlräume H aufweist. In die sich durch die besondere Anordnung der Bausteinelemente 1, 2 mit den Verbindungselementen 7 ergebenden Hohlräume H ist wiederum die (aufgeschäumte bzw. Dämm-)Schicht 3 vorgesehen. Mit anderen Worten ist der jeweilige Hohlraum H mit der Schicht 3 befüllt bzw. gefüllt. Dabei kann die Form der Hohlräume H je nach Belieben variieren. Figur 4 zeigt einen zylindrischen Hohlraum H, wohingegen Figur 5 einen quaderförmigen Hohlraum H zeigt. Die Ausgestaltung der Verbindungselemente 7 und somit auch der (aufgeschäumten bzw. Dämm-)Schicht 3 sind jedoch nicht durch die Erfindung beschränkt. Ebenso ist die Anzahl der Verbindungselemente 7 nicht durch die Erfindung beschränkt. Es ist beispielsweise auch denkbar, dass Verbindungselemente 7 wiederum mittels Verbindungselementen 7 (als weitere Bausteinelemente) verbunden sind, indem sie sich beispielsweise parallel zu den Bausteinelementen 1, 2 oder Teilbereichen derselben bzw. zu deren Haupterstreckungsebene(n) erstrecken. Auch können die Verbindungselemente 7 in einem Winkel zu der Haupterstreckungsebene der Bausteinelemente 1, 2 oder von Teilbereichen derselben verlaufen und sich somit zwischen den Bausteinelementen 1, 2, zwischen Verbindungselementen 7 oder zwischen Bausteinelement 1, 2 und Verbindungselement 7 - also quer zu dem Baustein B - erstrecken. Die so entstehende (aufgeschäumte bzw. Dämm- )Schicht 3 hätte dann im Querschnitt eine dreieckige Form. Die Verbindungselemente 7 können, wie in Figur 10 dargestellt, als separate Bausteinelemente vorliegen, oder, wie in den Figuren 4 und 5 gezeigt, integral mit dem/den Bausteinelement(en) 1, 2 ausgebildet sein.

Die erfindungsgemäßen Bausteine der Figuren 4 und 5 sind ebenso in jeder Form realisierbar und können beispielsweise als Säulen, Fenster- und Türeinfassungen, Gesimse und dergleichen ausgebildet sein. Eine Feder-/Nut-Verbindung kann beispielsweise derart bereitgestellt werden, dass die (aufgeschäumte bzw. Dämm-)Schicht 3 in den Figuren 4a und 5a bzgl. der Bausteinelemente 1, 2, 7 senkrecht zur Zeichenebene zueinander versetzt vorgesehen sind und folglich in einer Art Stecksystem im Sinne von Spielbausteinen aufeinandergesetzt bzw. aufeinandergesteckt werden können.

Die Schicht 3 kann vorzugsweise aus einem festen, porösen, rieselfähigen, fließfähigen, flüssigen und/oder gasförmigen -außer Luft- Material bestehen, wobei die Schicht 3 vorzugsweise direkt mit den den jeweiligen Hohlraum H begrenzenden Bausteinelementen 1, 2, 7 verbunden ist; also vorzugsweise in direktem oder -mit festem räumlichen Bezug- indirekten Kontakt zu den Bausteinelementen 1, 2, 7 steht. Ist die Schicht 3 aus einem flüchtigen oder in sonstiger Weise fließ- oder rieselfähigen Material gebildet, so kann der Baustein B ferner derart ausgebildet sein, dass ein Verlust von Dämmmaterial vermieden wird. Hierzu können bspw. diejenigen Stirnseiten des Bausteins B, zu denen die Hohlräume H offen sind, mit weiteren Bausteinelementen 1, 2, 7 versehen sein (separat vorgesehen oder integral ausgebildet) oder auch die Hohlräume H mit separaten Elementen (nicht gezeigt) verschlossen sein. Auch ist es denkbar, dass die Öffnungen der Hohlräume H mit einer aufgeschäumten Schicht 3 gemäß der Erfindung verschlossen werden und dabei gasförmiges, fließfähiges oder rieselfähiges Dämmmaterial einschließen, wobei dieser Verbund die Schicht 3 bildet. Alternativ ist es auch denkbar, dass die Dämm-Schicht 3, wie oben beschrieben, direkt mit den Bausteinelementen 1, 2, 7 als aufgeschäumte (Dämm- )Schicht 3 verschäumt ist.

Im Folgenden wird ein Verfahren zur Herstellung eines erfindungsgemäßen Bausteins B beschrieben.

In einem ersten Schritt wird wenigstens ein Bausteinelement 1, 2, vorzugsweise wenigstens zwei sich gegenüberliegende Bausteinelemente 1, 2 bereitgestellt. Darüber hinaus können auch mehr als zwei Bausteinelemente 1, 2 bereitgestellt werden, welche beispielsweise als Verbindungselement 7 sich zwischen zwei gegenüberliegenden Bausteinelementen 1, 2 erstrecken. Die Bausteinelemente 1, 2, 7 können wahlweise separat bereitgestellt oder integral ausgebildet sein.

In einem zweiten Schritt wird dann eine Schicht bzw. (also insbesondere im Fall von wenigstens zwei bereitgestellten Bausteinelementen 1, 2) Zwischenschicht 3 derart vorgesehen bzw. aufgeschäumt, dass die Schicht bzw. Zwischenschicht 3 direkt mit dem einen oder zwischen und mit den wenigstens zwei Bausteinelementen 1, 2 verbunden, vorzugsweise verschäumt wird. Beispielsweise durch ein direktes Verschäumen wird eine feste Verbindung zwischen der aufgeschäumten Schicht 3 und dem/den Bausteinelement(en) 1, 2, 7 bereitgestellt, ohne zusätzliche Verbindungsmittel (bspw. Kleber) zu verwenden. Der so entstehende Baustein B kann aufgrund der Kombination von Bausteinelementen 1, 2 mit einer direkt verbundenen bzw. verschäumten (aufgeschäumten) Schicht 3 sicher zum Bau von Gebäuden oder sonstigen vergleichbaren Konstruktionen S verwendet werden. Beim Vorsehen bzw. Aufschäumen der Schicht 3 können überdies wahlweise Elemente in die (aufgeschäumte) Schicht 3 eingebracht, vorzugsweise eingeschäumt werden, wie bspw. Armierungen, Tür- oder Fensterscharniere, Sensorik, Leitungen und sonstige mechanische, elektrische und/oder elektronische und/oder sonstige Elemente oder Installationen und dergleichen.

Vorzugsweise wird die Schicht bzw. Zwischenschicht 3 derart vorgesehen bzw. aufgeschäumt, dass die Bausteinelemente 1, 2 einerseits und die Schicht bzw. Zwischenschicht 3 andererseits derart versetzt zueinander angeordnet sind, dass wenigstens zwei gegenüberliegende Stirnseiten 4', 4" des Bausteins B zum formschlüssigen Verbinden von mehreren Bausteinen B vorzugsweise als Feder 5 und Nut 6 ausgebildet sind. Hierdurch erhält man einen Baustein B wie er beispielsweise in sämtlichen Figuren zu sehen ist. Durch entsprechende Ausbildung der Gieß- bzw. Aufschäumform können, bspw. mittels entsprechender Kerne, Nute 8 oder Kanäle K' direkt in die aufzuschäumende Schicht 3 eingebracht und somit in einfacher Weise bereitgestellt werden. Als Kern kann beispielsweise auch direkt ein Rohr oder - in Randbereichen - auch ein längsgeteiltes (also halbes) Rohr eingesetzt werden, welches in die aufgeschäumte Schicht 3 direkt eingeschäumt wird und in dieser als Leitung verbleibt. Durch zusammensetzen zweier Bausteine B wird somit aus halben Rohren ein geschlossenes Rohr bzw. ein geschlossener Kanal K gebildet, so dass sich Kanäle bzw. Kanalelemente (also Nute 8 bzw. halbe Rohre) einzelner Bausteine B sich zu einem zusammenhängenden, geschlossenen Kanalsystem zusammenfügen. Alternativ können die Nute 8 oder Kanäle K' bzw. Rohre auch nachträglich in die Schicht 3 eingebracht bzw. in dieser vorgesehen werden.

Weiterhin können die Bausteinelemente 1, 2, 7 auch eingefärbt werden, so dass den jeweiligen Kundenwünschen Rechnung getragen werden kann oder sich dadurch das Gebäude in eine bestimme Landschaft einfügt. Vorzugsweise sind die Bausteinelemente 1, 2, 7 aus Sandbaustein. Die (aufgeschäumte) Schicht 3 besteht vorzugsweise aus einem porösen Material, besonders vorzugsweise im Wesentlichen aus Polyurethan; sie kann aber auch aus anderen (dämmenden) Materialien bereitgestellt werden. Zudem kann dasjenige Bausteinelement 1, 2, welches auf der Innenseite eines Gebäudes vorzusehen ist, mit einer klimabalancierenden Wirkung derart ausgestaltet sein, dass es aus einem Material hergestellt ist, welches in Abhängigkeit der Umgebungsbedingungen Feuchtigkeit aus der Umgebung aufnimmt und an diese wieder abgibt. Der Baustein B kann weiterhin membranartig ausgebildet und/oder in wenigstens einer oder zwei Richtungen senkrecht zu einer Haupterstreckungsebene des Bausteinelements 1, 2 oder eines Teilbereichs desselben atmungsaktiv und/oder vorzugsweise nur einer oder mehrere Bausteinelemente 1, 2 feuchtigkeitsaktiv sein.

Die Erfindung ist nicht durch die vorgenannten Ausführungsbeispiele beschränkt, solange sie vom Gegenstand der Erfindung umfasst ist. So ist der erfindungsgemäße Baustein B sowie dessen einzelne Elemente nicht auf eine bestimmte Dimension (Höhe, Breite, Tiefe (=Dicke)) beschränkt. Auch können die Bausteinelemente andere Bausteine als Sandbausteine aufweisen und in beliebiger Anzahl miteinander verschäumt bzw. durch eine Dämm-Schicht 3 verbunden werden bzw. die Dämm-Schicht 3 einschließen. Die (aufgeschäumte bzw. Dämm-)Schicht kann zudem auch aus einem anderen Material als Polyurethan gebildet sein; bspw. aus festem, porösem, rieselförmigem, fließfähigem, flüssigem oder gasförmigem -außer Luft- Material bestehen. Ferner können die Bausteine B beliebig mit weiteren Elementen als zusätzliche optische oder technische Oberfläche bestückt werden, wie bspw. Stein, Holz, Glas, Metall, Photovoltaikmodule, etc.. Weiterhin kann anstatt der aufgeschäumten Schicht eine direkt mit den Bausteinelementen verbundene Dämm-Schicht bereitgestellt werden. Die Merkmale der einzelnen Ausführungsformen sind zudem beliebig miteinander kombinierbar.

### Bezugszeichenliste

- 1: erstes Bausteinelement
- 2: zweites Bausteinelement
- 3: Schicht, aufgeschäumte Schicht, Dämm-Schicht, Zwischenschicht
- 4,4',4": Stirnseite eines Bausteins
- 5: Feder (einer Feder-/Nut-Verbindung)
- 6: Nut (einer Feder-/Nut-Verbindung)
- 7: Verbindungselement
- 8: Nut entlang einer Stirnseite der (aufgeschäumten) Schicht
- 40: Stirnseite eines Bausteinelements
- 41: Stirnseite der (aufgeschäumten) Schicht
- A: Tür- oder Fensterrahmenausschnitt
- B: Baustein
- E: Eckverbindung
- H: Hohlraum
- K,K': Kanal
- R: Radius der Nut 8
- S: Konstruktion
- V,Vh,Vv: Versatz

## Patentansprüche

1. Baustein (B) für den Bau von Gebäuden aufweisend:
zumindest ein Bausteinelement (1) und eine mit diesem Bausteinelement (1) direkt verschäumte aufgeschäumte Schicht (3).

2. Baustein (B) für den Bau von Gebäuden aufweisend:
zumindest ein Bausteinelement (1) und eine mit diesem Bausteinelement (1) direkt verbundene Dämm-Schicht (3), wobei die Verbindung vorzugsweise durch Kleben oder das direkte Verschäumen einer aufgeschäumten Dämm-Schicht (3) mit dem Bausteinelement (1) bereitgestellt ist.

3. Baustein (B) nach Anspruch 1 oder 2, wobei ein erstes Bausteinelement (1) und ein zweites Bausteinelement (2) sich gegenüberliegen und die Schicht (3) als Zwischenschicht zwischen den beiden Bausteinelementen (1, 2) ausgestaltet und mit den Bausteinelementen (1,2) vorzugsweise direkt verschäumt ist.

4. Baustein (B) nach einem der vorhergehenden Ansprüche
, wobei
das bzw. die Bausteinelement(e) (1, 2) einerseits und die Schicht (3) andererseits, oder wenigstens deren Stirnseiten (40, 41) auf wenigstens einer Stirnseite (4, 4', 4 ") des Bausteins (B), derart zueinander versetzt (V) angeordnet sind, dass wenigstens eine Stirnseite (4, 4', 4") des Bausteins (B) vorzugsweise als Feder (5) oder Nut (6), vorzugsweise wenigstens zwei gegenüberliegende Stirnseiten (4, 4', 4") des Bausteins (B) vorzugsweise als Feder (5) und/oder Nut (6) zum formschlüssigen Verbinden von Bausteinen (B) ausgebildet sind.

5. Baustein (B) nach Anspruch 3 oder 4 , wobei zwischen den Bausteinelementen (1, 2) zumindest ein die Bausteinelemente (1, 2) verbindendes Verbindungselement (7) bereitgestellt ist, welches sich vorzugsweise im Wesentlichen senkrecht zu einer Haupterstreckungsebene der Bausteinelemente (1, 2) oder eines Teilbereichs der Bausteinelemente (1,2) erstreckt, und
wobei vorzugsweise wenigstens ein, besonders vorzugsweise wenigstens zwei einander vorzugsweise gegenüberliegende Paare benachbarter Stirnseiten (40, 40) der Bausteinelemente (1, 2) mit einem Verbindungselement (7) als Bausteinelement verbunden sind, so dass die Bausteinelemente (1,2) vorzugsweise eine U-Form oder eine seitlich geschlossene Doppel-U-Form bilden.

6. Baustein (B) nach einem der vorhergehenden Ansprüche,
wobei
die einzelnen Bausteinelemente (1,2) integral miteinander ausgebildet sind.

7. Baustein (B) nach einem der vorhergehenden Ansprüche,
wobei
die Schicht (3) im Querschnitt des Bausteins (B) rechteckig, quadratisch oder kreisrund ausgestaltet ist.

8. Baustein (B) nach einem der vorhergehenden Ansprüche,
wobei
zumindest eine Nut (8) entlang einer Stirnseite der Schicht (3) angeordnet ist, wobei die Nut (8) vorzugsweise parallel zu den diese einschließenden Bausteinelementen (1,2) bzw. einer Haupterstreckungsebene des Bausteinelements (1, 2) oder der jeweiligen Teilbereiche des Bausteinelements (1, 2) verläuft.

9. Baustein (B) nach einem der vorhergehenden Ansprüche,
wobei
die Bausteinelemente (1,2) vorzugsweise als Platte oder L-förmig ausgebildet sind,
wobei die Bausteinelemente (1,2) vorzugsweise Sandbausteine sind, und
wobei die Bausteinelemente (1,2) vorzugsweise durch Farbmittel eingefärbt sind.

10. Baustein (B) nach einem der vorhergehenden
Ansprüche, wobei
die Schicht (3) vorzugsweise aus einem porösen Material besteht, besonders vorzugsweise im Wesentlichen aus Polyurethan besteht.

11. Baustein (B) nach einem der vorhergehenden
Ansprüche, wobei
beliebige Elemente in die Schicht (3) eingebracht, vorzugsweise eingeschäumt sind, insbesondere Armierungen, elektrische und/oder elektronische Bausteine und/oder Systeme und/oder Leitungen.

12. Baustein (B) nach einem der vorhergehenden
Ansprüche, wobei
der Baustein (B) als Säulenelement, Fensterelement oder Türeinfassungselement ausgestaltet ist.

13. Baustein (B) nach einem der vorhergehenden Ansprüche, wobei
vorzugsweise eines der Bausteinelemente (1, 2) mit einer klimabalancierenden Wirkung ausgebildet ist, vorzugsweise derart, dass es aus einem Material hergestellt ist, welches in Abhängigkeit der Umgebungsbedingungen Feuchtigkeit aus der Umgebung aufnimmt und an diese wieder abgibt,
wobei der Baustein (B) vorzugsweise membranartig ausgebildet ist und/oder vorzugsweise in wenigstens einer oder zwei Richtungen senkrecht zu einer Haupterstreckungsebene des Bausteinelements (1, 2) oder Teilbereichen desselben atmungsaktiv ist und/oder vorzugsweise nur einer oder mehrere der Bausteinelemente (1, 2) feuchtigkeitsaktiv ist.

14. Baustein (B) für den Bau von Gebäuden aufweisend:
wenigstens zwei einander gegenüberliegende Bausteinelemente (1, 2), wobei zwischen den Bausteinelementen (1, 2) die Bausteinelemente (1, 2) verbindende Verbindungselemente (7) als Bausteinelemente derart vorgesehen sind, dass der Baustein (B) Hohlräume (H) aufweist, welche mit einer Dämm-Schicht (3) gefüllt sind, wobei die Dämm-Schicht (3) vorzugsweise aus einem festen, porösen, rieselfähigen, fließfähigen, flüssigen oder gasförmigen -außer Luft- Material besteht, wobei die Dämm-Schicht (3) vorzugsweise direkt mit den den jeweiligen Hohlraum (H) begrenzenden Bausteinelementen (1, 2, 7) verbunden ist, besonders vorzugsweise direkt mit den Bausteinelementen (1, 2, 7) verschäumt ist.

15. Konstruktion (S) aufweisend wenigstens zwei Bausteine (B) gemäß einem der vorgenannten Ansprüche.

16. Konstruktion (S) nach Anspruch 15, wobei die Bausteine (B) wenigstens formschlüssig und/oder stoffschlüssig miteinander verbunden sind,
wobei die Bausteine (B) lösbar oder unlösbar miteinander verbunden sind, beispielsweise mittels Kleber oder einer Verschraubung oder dergleichen, und wobei vorzugsweise eine Feder (5) eines ersten Bausteins (B) in eine Nut (6) eines zweiten Bausteins (B) eingreift, so dass die Bausteine (B) vorzugsweise formschlüssig miteinander verbunden sind.

17. Verfahren zur Herstellung eines Bausteins (B) nach einem der Ansprüche 1 bis 14, aufweisend die folgenden Schritte:
- Bereitstellen wenigstens eines, vorzugsweise wenigstens zweier sich gegenüberliegender Bausteinelemente (1,2);
- Vorsehen, vorzugsweise Aufschäumen einer Schicht bzw. Zwischenschicht (3) derart, dass die Schicht bzw. Zwischenschicht (3) direkt mit dem einen oder zwischen und mit den wenigstens zwei Bausteinelementen (1, 2) verbunden, vorzugsweise verschäumt wird,
- wobei die Schicht bzw. Zwischenschicht (3) vorzugsweise derart vorgesehen bzw. aufgeschäumt wird, dass die Bausteinelemente (1, 2) einerseits und die Schicht bzw. Zwischenschicht (3) andererseits, oder wenigstens deren Stirnseiten (40, 41) auf wenigstens einer Stirnseite (4, 4', 4 ") des Bausteins (B), derart versetzt zueinander angeordnet sind, dass wenigstens eine Stirnseite (4, 4', 4 ") des Bausteins (B) vorzugsweise als Feder (5) oder Nut (6), vorzugsweise wenigstens zwei gegenüberliegende Stirnseiten (4, 4', 4 ") des Bausteins (B) vorzugsweise als Feder (5) und/oder Nut (6) zum formschlüssigen Verbinden von Bausteinen (B) ausgebildet sind.
